(19) Europäisches Patentamt
European Patent Office
Office européen des brevets

(11) EP 4 752 185 A1

(12) **EUROPEAN PATENT APPLICATION**
published in accordance with Art. 153(4) EPC

(43) Date of publication:
**03.06.2026 Bulletin 2026/23**

(21) Application number: **24845413.4**

(22) Date of filing: **11.07.2024**

(51) International Patent Classification (IPC):
***C09J 175/04*** *(2006.01)* ***C09J 11/06*** *(2006.01)*

(52) Cooperative Patent Classification (CPC):
**C09J 11/06; C09J 175/04**

(86) International application number:
**PCT/JP2024/025037**

(87) International publication number:
**WO 2025/023032 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 JP 2023120646**

(71) Applicant: **DIC Corporation**
**Tokyo 174-8520 (JP)**

(72) Inventors:
- **HIROTA, Yasunobu**
  **Tokyo 174-8520 (JP)**
- **TOMITA, Daiki**
  **Tokyo 174-8520 (JP)**
- **KAYASUGA, Tomoya**
  **Tokyo 174-8520 (JP)**
- **FURIOSI, Christian**
  **20063 Cernusco sul Naviglio (IT)**
- **NERI MARI, Matteo**
  **20063 Cernusco sul Naviglio (IT)**

(74) Representative: **Kraus & Lederer PartGmbB**
**Thomas-Wimmer-Ring 15**
**80539 München (DE)**

# (54) ADHESIVE, MULTILAYER BODY, AND PACKAGING MATERIAL

(57) Provided is a two-component curable adhesive using a polyurethane polyisocyanate in which side reactions are suppressed during urethanization reaction and at the time when an unreacted isocyanate monomer content is removed by distillation. This two-component curable adhesive contains a polyisocyanate composition (X) and a polyol composition (Y), in which the polyisocyanate composition (X) contains a polyurethane polyisocyanate (Al), a diisocyanate monomer (A2), and a polyphosphoric acid (B), a content of the diisocyanate monomer (A2) occupying the polyisocyanate composition (X) is 0.1 mass% or less, and a proportion of the polyphosphoric acid (B) to the polyurethane polyisocyanate (Al) is 100 ppm or more and 5,000 ppm or less.

EP 4 752 185 A1

## Description

TECHNICAL FIELD

The present invention relates to an adhesive, a laminate produced using the adhesive, and a packaging material.

BACKGROUND ART

A laminate for use in various packaging materials, labels, and the like is provided with design properties, functionality, preservability, convenience, transportability, and the like by laminating substrates such as various plastic films, metal foils, and paper. A packaging material obtained by forming the laminate into a bag shape is used as a packaging material in various fields such as foods, pharmaceuticals, and detergents. In the production of such a laminate, a urethane reactive one-component or two-component adhesive (hereinafter, may be referred to as a two-component curable adhesive or a reactive adhesive) has been frequently used.

Examples of the urethane reactive two-component curable adhesives include a two-component curable adhesive using a component containing a certain amount of an isocyanate monomer such as an isocyanate prepolymer. However, from the viewpoint of industrial safety and health, there is a movement to regulate the use of the isocyanate monomer. The European Commission has adopted the REACH regulation of banning products containing 0.1 mass% or more of the isocyanate monomer from being marketed unless certain requirements are satisfied.

There are also other concerns about the isocyanate monomer. In the case of producing a laminate for food packaging using a two-component curable adhesive containing an aromatic isocyanate prepolymer, the unreacted aromatic isocyanate monomer may remain in an adhesive layer. The isocyanate monomer reacts with water present around to form a primary aromatic amine (PAA), which may move through a film to elute into the content (food). There is a concern that the PAA is harmful to the human body, and various regulations such as the determination of the detection limit of the PAA issued by the European Commission in the rules regarding plastic materials and products for food contact are provided.

Since the PAA reacts with the unreacted aromatic isocyanate present therearound, the concentration of the PAA gradually decreases even in the case where the aromatic isocyanate remains in the adhesive layer. The concentration of the PAA will eventually fall below the detection limit, but from the viewpoint of the production efficiency of the laminate for food packaging, the initial amount of the aromatic isocyanate monomer remaining in the adhesive layer is preferably low.

Methods for reducing the content of the isocyanate monomer have been studied in the related art.

For example, PTL 1 discloses a method for forming an isocyanate functional prepolymer having a low residual isocyanate amount, the method including: (a) causing a polyol selected from the group consisting of a polyether polyol, a polyester polyol, a polyester polyether polyol, an acrylic polyol, a glycol, and a mixture thereof to react with an isocyanate monomer to form a reaction mixture containing a prepolymer having an NCO content of 2.5 wt% to 11.5 wt% and an average NCO functional group in a range of 2.0 to 3.0; and (b) passing the reaction mixture containing the prepolymer and an unreacted isocyanate through a short pass evaporator to remove the unreacted isocyanate until the amount thereof is less than 0.15 wt%.

PTL 2 describes a method for producing a one-component laminate adhesive, including causing a diisocyanate monomer to react with a polyol in the presence of a catalyst at an NCO/OH ratio of 2.5 or more to obtain an isocyanate-terminated prepolymer, and passing the isocyanate-terminated prepolymer through a thin film distillation apparatus or a molecular distillation apparatus to reduce the amount of the isocyanate monomer to 0.1 mass% or less.

CITATION LIST

PATENT LITERATURE

PTL 1: JP2002-265552A
PTL 2: EP3176196A1

SUMMARY OF INVENTION

TECHNICAL PROBLEM

In the case of obtaining the isocyanate functional prepolymer having a low residual isocyanate amount by using such a method, a side reaction may occur during a urethanization reaction or at the time when a residual isocyanate

monomer is removed from the isocyanate functional prepolymer. Since the isocyanate functional prepolymer is discolored to yellow or brown due to such a side reaction, or a desired NCO% is not obtained, suppression thereof is required.

The present invention has been made in view of such circumstances, and an object of the present invention is to provide a polyurethane polyisocyanate in which side reactions are suppressed during a urethanization reaction and at the time when an unreacted isocyanate monomer content is removed by distillation.

SOLUTION TO PROBLEM

That is, the present invention relates to a two-component curable adhesive containing a polyisocyanate composition (X) and a polyol composition (Y), in which the polyisocyanate composition (X) contains a polyurethane polyisocyanate (A1), a diisocyanate monomer (A2), and a polyphosphoric acid (B), a content of the diisocyanate monomer (A2) occupying the polyisocyanate composition (X) is 0.1 mass% or less, and a proportion of the polyphosphoric acid (B) to the polyurethane polyisocyanate (A1) is 100 ppm or more and 5000 ppm or less.

ADVANTAGEOUS EFFECTS OF INVENTION

According to the present invention, it is possible to obtain a polyurethane polyisocyanate in which side reactions are suppressed during a urethanization reaction and at the time when an unreacted isocyanate monomer content is removed by distillation.

DESCRIPTION OF EMBODIMENTS

<Two-component Curable Adhesive>

An adhesive according to the present invention is a two-component curable adhesive containing a polyisocyanate composition (X) and a polyol composition (Y). Hereinafter, the adhesive according to the present invention will be described in detail.

(Polyisocyanate Composition (X))

The polyisocyanate composition (X) for use in the adhesive according to the present invention contains a polyurethane polyisocyanate (A1), a diisocyanate monomer (A2), and a polyphosphoric acid (B). In addition, the content of the diisocyanate monomer (A2) occupying the polyisocyanate composition (X) is 0.1 mass% or less.

(Polyurethane Polyisocyanate (A1))

The polyurethane polyisocyanate (A1) is a reaction product of a diisocyanate monomer and a polyol compound. As the diisocyanate monomer, known aromatic, araliphatic, aliphatic, and alicyclic diisocyanates can be used alone or in combination of two or more kinds thereof.

Examples of the aromatic diisocyanate include, but are not limited to, 2,2'-diphenylmethane diisocyanate, 2,4'-diphenylmethane diisocyanate, 4,4'-diphenylmethane diisocyanate (another name: MDI), polymethylene polyphenyl polyisocyanate (also referred to as polymeric MDI or crude MDI), 1,3-phenylene diisocyanate, 4,4'-diphenyl diisocyanate, 1,4-phenylene diisocyanate (another name: PPDI), 2,4-tolylene diisocyanate, 2,6-tolylene diisocyanate (another name: TDI), 4,4'-toluidine diisocyanate, 2,4,6-triisocyanate toluene, 1,3,5-triisocyanate benzene, tolidine diisocyanate (another name: TODI), dianisidine diisocyanate, naphthalene diisocyanate (another name: NDI), 4,4'-diphenyl ether diisocyanate, and 4,4',4"-triphenylmethane triisocyanate.

The araliphatic diisocyanate means an aliphatic isocyanate having one or more aromatic rings in the molecule, and examples thereof include, but are not limited to, m- or p-xylylene diisocyanate (another name: XDI) and $\alpha,\alpha,\alpha',\alpha'$-tetramethylxylylene diisocyanate (another name: TMXDI).

Examples of the aliphatic diisocyanate include, but are not limited to, trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI).

Examples of the alicyclic diisocyanate include, but are not limited to, 3-isocyanatomethyl-3,5,5-trimethylcyclohexyl isocyanate, isophorone diisocyanate (another name: IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexyl isocyanate (another name: hydrogenated MDI or HMDI), 1,3-bis(isocyanatomethyl) cyclohexane (another name: hydrogenated XDI or HXDI), hydrogenated TMXDI, and norbornane diisocyanate (another

name: NBDI).

As the polyol compound, a known polyol compound can be used. Examples thereof include: glycols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;

trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
polyether polyols obtained by addition polymerization of an alkylene oxide such as ethylene oxide, propylene oxide, butylene oxide, styrene oxide, epichlorohydrin, tetrahydrofuran, and cyclohexylene in the presence of a polymerization initiator such as a glycol or a trifunctional or tetrafunctional aliphatic alcohol;
a polyester polyol (1), which is a reaction product of a polyester obtained by a ring-opening polymerization reaction of a cyclic ester compound such as propiolactone, butyrolactone, ε-caprolactone, σ-valerolactone, and β-methyl-σ-valerolactone with a polyhydric alcohol such as the above glycols, glycerin, trimethylolpropane, and pentaerythritol;
a polyester polyol (2) obtained by reacting a bifunctional polyol such as a glycol, a dimer diol, or a bisphenol with a polycarboxylic acid;
a polyester polyol (3) obtained by reacting a trifunctional or tetrafunctional aliphatic alcohol with a polycarboxylic acid;
a polyester polyol (4) obtained by reacting a bifunctional polyol, a trifunctional or tetrafunctional aliphatic alcohol, and a polycarboxylic acid;
a polyester polyol (5) which is a polymer of hydroxy acids such as dimethylolpropionic acid and castor oil fatty acid;
a polyurethane polyol (1) obtained by increasing the molecular weight of at least one kind selected from a bifunctional polyol and a trifunctional or tetrafunctional aliphatic alcohol using an isocyanate compound;
a polyether urethane polyol (2) obtained by further increasing the molecular weight of a polyether polyol using an isocyanate compound;
a polyester polyurethane polyol (3) obtained by increasing the molecular weight of the polyester polyols (1) to (5) using an isocyanate compound;
a polyester polyether polyurethane polyol (4) obtained by reacting at least one kind of the polyester polyols (1) to (5), a polyether polyol, and an isocyanate compound;
castor oil-based polyols such as a castor oil, a dehydrated castor oil, a hydrogenated castor oil, which is a hydrogenated product of the castor oil, and an castor oil alkylene oxide 5-to-50 mole adduct; and a mixture thereof.
One or two or more kinds of these can be used in combination.

Examples of the polycarboxylic acid for use in the synthesis of the polyester polyols (2) to (4) include: aromatic polybasic acids such as orthophthalic acid, terephthalic acid, isophthalic acid, phthalic acid anhydride, 1,4-naphthalenedicarboxylic acid, 2,5-naphthalenedicarboxylic acid, 2,6-naphthalenedicarboxylic acid, 2,3-naphthalenedicarboxylic acid anhydride, naphthalic acid, trimellitic acid, trimellitic acid anhydride, pyromellitic acid, pyromellitic acid anhydride, biphenyldicarboxylic acid, 1,2-bis(phenoxy)ethane-p,p'-dicarboxylic acid, benzophenonetetracarboxylic acid, benzophenonetetracarboxylic acid dianhydride, 5-sodium sulfoisophthalic acid, tetrachlorophthalic acid anhydride, and tetrabromophthalic acid anhydride;

methyl esters of the aromatic polybasic acids, such as dimethyl terephthalate and dimethyl 2,6-naphthalenedicarboxylate;
aliphatic polybasic acids such as malonic acid, succinic acid, succinic acid anhydride, glutaric acid, adipic acid, pimelic acid, suberic acid, azelaic acid, sebacic acid, fumaric acid, maleic acid, maleic acid anhydride, itaconic acid, and dimer acid;
alkyl esters of the aliphatic polybasic acids, such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate; and
alicyclic polybasic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic acid anhydride, 4-methylhexahydrophthalic acid anhydride, hexahydrophthalic acid anhydride, cyclohexane-1,2,4-tricarboxylic acid-1,2-anhydride, humic acid anhydride, and het acid anhydride.
One or two or more kinds of these can be used in combination.

The isocyanate compound for use in the synthesis of the polyurethane polyols (1) to (4) can be the same as the diisocyanate monomer exemplified above.

The polyol compound is preferably a polyether polyol, and preferably a polyether polyol obtained by addition polymerization of at least one kind of alkylene oxide selected from ethylene oxide, propylene oxide, or butylene oxide in the presence of a polymerization initiator such as a glycol or a trifunctional or tetrafunctional aliphatic alcohol.

(Diisocyanate Monomer (A2))

The polyisocyanate composition (X) contains a diisocyanate monomer (A2), and the content thereof is 0.1 mass% or less in the polyisocyanate composition (X). The diisocyanate monomer (A2) is a diisocyanate monomer that is for use in the synthesis of the polyurethane polyisocyanate (A1) or a polyisocyanate compound (A3) to be described later and that remains unremoved.

(Other Polyisocyanate Compound (A3))

The polyisocyanate composition (X) for use in the present invention may contain a polyisocyanate compound (A3) other than the polyurethane polyisocyanate (A1). Examples of the polyisocyanate compound (A3) include a biuret, a nurate, an allophanate, a carbodiimide-modified product, and a uretdione-modified product of at least one kind of diisocyanate selected from an aromatic diisocyanate, an araliphatic diisocyanate, an aliphatic diisocyanate, and an alicyclic diisocyanate. The polyisocyanate compound (A3) can be used alone or in combination of two or more kinds thereof.

The aromatic diisocyanate, the araliphatic diisocyanate, the aliphatic diisocyanate, and the alicyclic diisocyanate that can be used are the same as those exemplified as the raw material for the polyurethane polyisocyanate (A1).

In the case where the polyisocyanate composition (X) contains the polyisocyanate compound (A3), the use amount thereof may be appropriately adjusted, and is, for example, 5 mass% to 50 mass% of the total amount with the polyurethane polyisocyanate (A1).

(Polyphosphoric Acid (B))

The polyisocyanate composition (X) contains a polyphosphoric acid (B), and the proportion of the polyphosphoric acid (B) to the polyurethane polyisocyanate (A1) is preferably 100 ppm or more and 5000 ppm or less, and more preferably 500 ppm or more and 3000 ppm or less. The polyphosphoric acid (B) is a condensate of phosphoric acid and is a compound represented by the following formula (1). In the following formula (1), n is a natural number of 1 or more.

[Chem. 1]

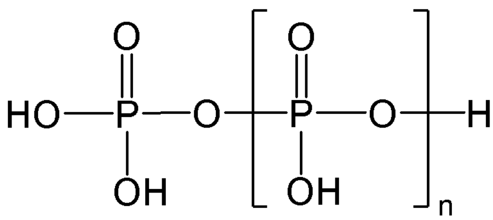

(1)

The polyphosphoric acid (B) for use in the present invention preferably contains a compound (B1) in which n in the above formula (1) is 2 or more and 5 or less. The content of the compound (B1) in the polyphosphoric acid (B) is preferably 5 mass% or more and 70 mass% or less.

<Production of Polyurethane Polyisocyanate (A1)>

(Step (1))

The polyurethane polyisocyanate (A1) is produced by reacting a diisocyanate monomer with a polyol compound under conditions in which the isocyanate group contained in the diisocyanate monomer is in excess relative to the active hydrogen group contained in the polyol compound, to obtain a composition containing the polyurethane polyisocyanate (A1) and the unreacted diisocyanate monomer. The equivalent ratio [NCO]/[active hydrogen group] of the isocyanate group to the active hydrogen group may be appropriately adjusted, and is, for example, 2.0 or more and 20.0 or less.

(Step (2))

Subsequently, the unreacted diisocyanate monomer is removed from the composition obtained in the above step. The diisocyanate monomer is removed by using a method of distilling the diisocyanate monomer under a reduced pressure using a short pass distillation apparatus, a thin film distillation apparatus, or the like. The degree of pressure reduction and the distillation temperature are appropriately adjusted depending on the diisocyanate monomer to be removed, and are, for example, 0.1 mbar or less and 120°C to 190°C. The removal step is performed until the content of the diisocyanate monomer in the total amount of the polyurethane polyisocyanate (A1) and the diisocyanate monomer is 0.1 mass% or less.
The step (1) and the step (2) are performed in the presence of the polyphosphoric acid (B). Accordingly, side reactions during urethanization and distillation under a reduced pressure can be suppressed, and the polyurethane polyisocyanate (A1) having an NCO% as designed and less coloration can be obtained. The addition amount of the polyphosphoric acid is 100 ppm or more and 5000 ppm or less of the polyurethane polyisocyanate (A1), which is calculated based on the use amount of the polyol compound. Note that, the polyurethane polyisocyanate (A1) is calculated assuming that 1 mol of the diisocyanate monomer reacts with 1 mol of the active hydrogen group in the polyol compound (for example, in the case where the polyol compound is a compound having two active hydrogen groups, one molecule of the polyol compound reacts with two molecules of the diisocyanate monomer to form the polyurethane polyisocyanate (A1)).
The content of the diisocyanate monomer can be measured, for example, by gas chromatography using an internal standard in accordance with ASTM D 3432. Alternatively, the content of the diisocyanate monomer can also be measured by liquid chromatography under the following conditions.
Apparatus: "ACQUITY UPLC H-Class" manufactured by Waters Corporation
Data processing: "Empower-3" manufactured by Waters Corporation
Column: "ACQUITY UPLC HSS T3" (100 mm × 2.1 mm φ, 1.8 μm), 40°C, manufactured by Waters Corporation
Eluent: ammonium formate aqueous solution/methanol, 0.3 mL/min
Detector: PDA
Preparation of sample:

1. 100 mg of appropriately blocked sample is dissolved in 10 ml of THF (for LC),
2. the mixture is stirred by vortex for 30 seconds,
3. the resultant is appropriately diluted with an eluent (mobile phase), and
4. the resultant was passed through a 0.2 μm filtration filter to prepare a measurement sample.

Calculation of area ratio: the area ratio is calculated using the maximum absorption wavelength for a target product.
In the case where the adhesive according to the present invention is used as a solventless two-component curable adhesive, the viscosity of the polyisocyanate composition (X) containing no organic solvent is adjusted to a range suitable for a non-solvent lamination method. For example, the viscosity at 40°C is adjusted to a range of 100 mPas to 50,000 mPas, and preferably 500 mPas to 20,000 mPas. The viscosity of the polyisocyanate composition (X) can be adjusted by, for example, adjusting the structure (polyol to be used) of the polyurethane polyisocyanate (A1) or using the polyisocyanate compound (A2) in combination. The viscosity of the polyisocyanate composition (X) can be measured, for example, using a rotary viscometer at a cone plate of 1° × 50 mm in diameter, a shear rate of 100 $sec^{-1}$, and 40°C ± 1°C.
In the case where the adhesive according to the present invention is used as a solvent type two-component curable adhesive, the viscosity of the polyisocyanate composition (X) can be adjusted to a viscosity suitable for coating by dilution with an organic solvent.

(Polyol Composition (Y))

The polyol composition (Y) contains a polyol compound (C) having a plurality of hydroxy groups. The polyol compound (C) is not particularly limited, and any polyol compound can be used as long as it is usually used in a urethane reactive two-component curable adhesive.
Specific examples of the polyol compound (C) include a polyether polyol (C1), a tertiary amino group-containing polyol (C2), a polyester polyol (C3), a polyester polyether polyol (C4), a polyurethane polyol (C5), a polyester polyurethane polyol (C6), a polyether polyurethane polyol (C7), a vegetable oil polyol (C8), a sugar alcohol (C9), a polycarbonate polyol (C10), an acrylic polyol (C11), a hydroxy group-containing olefin resin (C12), and a hydroxy group-containing fluororesin (C13).
Examples of the polyether polyol (C1) include one obtained by addition polymerization of an alkylene oxide such

as ethylene oxide, propylene oxide, butylene oxide, styrene oxide, epichlorohydrin, tetrahydrofuran, and cyclohexylene in the presence of a polymerization initiator such as glycols, for example, ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol, and trifunctional or tetrafunctional aliphatic alcohols such as glycerin, trimethylolpropane, pentaerythritol, and a triol of a polypropylene glycol.

Examples of the tertiary amino group-containing polyol (C2) include one obtained by addition polymerization of an alkylene oxide such as ethylene oxide, propylene oxide, butylene oxide, styrene oxide, epichlorohydrin, tetrahydrofuran, and cyclohexylene using an amine compound having an active hydrogen group as a polymerization initiator. As the amine compound, a known amine compound can be used, and examples thereof include: primary or secondary alkylamines such as ethylamine and diethylamine; amine compounds having a plurality of amino groups such as methylenediamine and ethylenediamine; and primary or secondary alkanolamines such as monoethanolamine and diethanolamine.

Specific examples of the tertiary amino group-containing polyol (C2) include, but are not limited to, a polypropylene glycol ethylenediamine ether, tri(1,2-polypropylene glycol)amine, N-ethyldiethanolamine, N-methyl-N-hydroxyethyl-N-hydroxyethoxyethylamine, pentakishydroxypropyldiethylenetriamine, and tetrakishydroxypropylethylenediamine. The tertiary amino group-containing polyol (C2) may be used alone or in combination of two or more kinds thereof. The tertiary amino group-containing polyol (C2) preferably has a secondary hydroxy group.

The polyester polyol (C3) is a reaction product of a polyhydric alcohol and a polycarboxylic acid. The polyhydric alcohol for use in the synthesis of the polyester polyol may be a diol or a tri- or higher functional polyol. In addition, a polyester polyether polyol using the polyether polyol as a diol, or a polyester polyurethane polyol using a polyurethane polyol to be described later may be used.

Examples of the diol include: aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol;

ether glycols such as a polyoxyethylene glycol and a polyoxypropylene glycol;
modified polyether diols obtained by ring-opening polymerization of an aliphatic diol and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;
lactone-based polyester polyols obtained by a polycondensation reaction of an aliphatic diol, a lanthanide, and various lactones such as ε-caprolactone;
bisphenols such as bisphenol A and bisphenol F; and
alkylene oxide adducts of bisphenols obtained by adding ethylene oxide, propylene oxide, or the like to bisphenols such as bisphenol A and bisphenol F.

Examples of the tri- or higher functional polyol include: aliphatic polyols such as trimethylolethane, trimethylolpropane, glycerin, hexanetriol, and pentaerythritol;

modified polyether polyols obtained by ring-opening polymerization of an aliphatic polyol and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by a polycondensation reaction of an aliphatic polyol and various lactones such as ε-caprolactone.

Examples of the polycarboxylic acid for use in the synthesis of the polyester polyol (C3) include: aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as orthophthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or dicarboxylic acids; p-hydroxybenzoic acid, p-(2-hydroxyethoxy)benzoic acid, and ester-forming derivatives of these dihydroxycarboxylic acids; and polybasic acids such as dimer acid.

The polyurethane polyol (C5) is a reaction product of a low or high molecular weight polyol and a polyisocyanate compound. As the low molecular weight polyol, those same as the polyhydric alcohols exemplified as the raw material for the polyester polyol can be used. Examples of the high molecular weight polyol include a polyether polyol and a polyester

polyol. As the polyisocyanate compound, those exemplified as the raw material for the polyurethane polyisocyanate (A1) and those exemplified as the polyisocyanate compound (A3) can be used.

Examples of the vegetable oil polyol (C8) include a castor oil, a dehydrated castor oil, a hydrogenated castor oil, which is a hydrogenated product of the castor oil, and an castor oil alkylene oxide 5-to-50 mole adduct.

Examples of the sugar alcohol (C9) include pentaerythritol, sucrose, xylitol, sorbitol, isomalt, lactitol, maltitol, and mannitol.

Since the polyisocyanate composition (X) according to the present invention has an extremely small content of the diisocyanate monomer, there is little concern about PAA, and by using the polyphosphoric acid described in the present application, the NCO% is as designed and coloration is suppressed. In addition, since the adhesive according to the present invention has excellent adhesion to a metal surface, the adhesive can be suitably used for production of a laminate for use in food packaging or the like, particularly a laminate for a packaging material using an aluminum foil or an aluminum vapor-deposited film. In the case where the adhesive according to the present invention is used for such an application, the polyol compound (C) preferably contains at least one kind selected from the polyether polyol (C1), the tertiary amino group-containing polyol (C2), the polyester polyol (C3), the polyester polyether polyol (C4), the polyurethane polyol (C5), the polyester polyurethane polyol (C6), the polyether polyurethane polyol (C7), the vegetable oil polyol (C8), and the sugar alcohol (C9).

The content of each of these polyol compounds (C) may be appropriately adjusted depending on the purpose, and is, for example, 50 mass% or more in the solid content of the polyol composition (Y).

The hydroxyl value of the polyol compound (C) can be appropriately adjusted, and is, for example, 1 mgKOH/g or more and 300 mgKOH/g or less. In the case where the adhesive according to the present invention is used as a solventless adhesive, the polyol compound (C) preferably has a hydroxyl value of 20 mgKOH/g or more and 300 mgKOH/g or less. In the case where the adhesive according to the present invention is used as a solvent type adhesive, the polyol compound (C) preferably has a hydroxyl value of 1 mgKOH/g or more and 50 mgKOH/g or less. Note that, the hydroxyl value of the polyol compound (C) can be calculated based on the average number of functional groups and the molecular weight of the polyol compound (C).

The polyol compound (C) preferably contains at least one kind selected from the polyether polyol (C1), the tertiary amino group-containing polyol (C2), and the polyester polyol (C3), and more preferably contains the tertiary amino group-containing polyol (C2) and at least one kind selected from the polyether polyol (C1) and the polyester polyol (C3). The blending amount of the tertiary amino group-containing polyol (C2) in the polyol compound (C) may be appropriately adjusted, and is, for example, 1 mass% or more and 50 mass% or less, preferably 1 mass% or more and 30 mass% or less, and more preferably 1 mass% or more and 20 mass% or less.

(Amine Compound (D))

The polyol composition (Y) may contain an amine compound (D) having an amino group. Note that, in the present description, the amino group refers to an $NH_2$ group or an NHR group (R represents an alkyl group or an aryl group which may have a functional group).

As the amine compound (D), known compounds can be used without particular limitation. Examples thereof include: an amine compound (D1) having a plurality of amino groups, such as methylenediamine, ethylenediamine, isophoronediamine, 3,9-dipropanamine-2,4,8,10-tetraoxaspirodoundecane, lysine, 2,2,4-trimethylhexamethylenediamine, hydrazine, piperazine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, poly(propylene glycol)diamine, poly(propylene glycol)triamine, poly(propylene glycol)tetraamine, 1,2-diaminopropane, 1,3-diaminopropane,

1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylenetriamine, 1,4-cyclohexanediamine, 4,4'-methylenebiscyclohexylamine, 4,4'-isopropylidenebiscyclohexylamine, norbornadiamine,

bis(aminomethyl)cyclohexane, diaminodicyclohexylmethane, isophoronediamine, menthenediamine, bis(cyanoethyl)diethylenetriamine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and polyurea amines, which are reaction products of the above various polyamines and the above various isocyanate components;

a primary or secondary alkanolamine (D2) such as monoethanolamine, monoisopropanolamine, monobutanolamine, N-methylethanolamine, N-ethylethanolamine, N-methylpropanolamine, diethanolamine, and diisopropanolamine; and

a primary or secondary amine (D3) such as ethylamine, octylamine, laurylamine, myristylamine, stearylamine, oleylamine, diethylamine, dibutylamine, and distearylamine.

The amine compound (D) is preferably blended in a blending amount such that the amine value of the polyol composition (Y) is 20 mgKOH/g to 70 mgKOH/g, and more preferably 25 mgKOH/g to 50 mgKOH/g.

Note that, the amine value in the present description means the number of milligrams of KOH equivalent to the amount of HCl required to neutralize 1 g of a sample and is not particularly limited. The amine value can be calculated using a known method. In the case where the chemical structure of the amine compound (D) and, if necessary, the average molecular weight and the like thereof are known, the amine value can be calculated based on (number of amino groups per molecule/average molecular weight) $\times$ 56.1 $\times$ 1000. In the case where the chemical structure, the average molecular weight, and the like of the amine compound are unknown, the amine value can be measured according to a known amine value measurement method, for example, JISK7237-1995.

(Monool Compound (E))

The polyol composition (Y) may contain a monool compound (E) having one alcoholic hydroxy group. The main chain of the monool compound (E) is not particularly limited, and examples thereof include a vinyl resin, an acrylic resin, a polyester, an epoxy resin, and a urethane resin each having one hydroxy group. In addition, aliphatic alcohols, alkyl alkylene glycols, and the like can also be used. The main chain of the monool compound (E) may be linear or branched. The bonding position of the hydroxy group is not particularly limited, and is preferably present at a terminal of the molecular chain.

Specific examples of the monool compound (E) include: aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, other alkanols (C20 to C50), oleyl alcohol, and an isomer thereof;

alicyclic monools such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, decatol, 2-cyclohexylcyclohexanol, 4-cyclohexylcyclohexanol, 4-(4-propylcyclohexyl)cyclohexanol, 4-(4-pentylcyclohexyl)cyclohexanol, α-ambrinol, deoxycorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methandienone, cortisone acetate, stenolone, and an isomer thereof;
araliphatic monools such as benzyl alcohol; and
polyoxyalkylene monools obtained by ring-opening addition polymerization of an alkylene oxide such as ethylene oxide, propylene oxide, butylene oxide, and tetrahydrofuran using an alkyl compound containing one active hydrogen as an initiator.

In the case where the two-component curable adhesive according to the present invention is used as a solventless adhesive, the viscosity of the polyol composition (Y) is adjusted to a range suitable for a non-solvent lamination method. For example, the viscosity at 40°C is adjusted to a range of 100 mPas to 50,000 mPas, and preferably 100 mPas to 20,000 mPas. The viscosity of the polyol composition (Y) can be adjusted by adjusting the skeleton of the polyol compound (C), a plasticizer to be described later, and the like. In the case of adjusting the viscosity by adjusting the skeleton of the polyol compound (B), the viscosity can be reduced by using, for example, a polypropylene glycol or a polyester polyol obtained by a reaction between an aliphatic carboxylic acid and a polyol. Alternatively, the viscosity can be increased by using a polyester polyol obtained by a reaction between an aromatic carboxylic acid and a polyol.

(Other Components in Adhesive)

The two-component curable adhesive according to the present invention may contain components other than the above components. The other components may be contained in either or both of the polyisocyanate composition (X) and the polyol composition (Y), or may be adjusted separately and mixed with the polyisocyanate composition (X) and the polyol composition (Y) immediately before coating using the adhesive. Hereinafter, each component will be described.

(Catalyst)

Examples of a catalyst include a metal-based catalyst, an amine-based catalyst, an aliphatic cyclic amide compound, and a quaternary ammonium salt.

Examples of the metal-based catalyst include a metal complex-based catalyst, an inorganic metal-based catalyst, and an organic metal-based catalyst. Examples of the metal complex-based catalyst include acetylacetonate salts of a metal selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate.

Examples of the inorganic metal-based catalyst include those selected from Sn, Fe, Mn, Cu, Zr, Th, Ti, Al, and Co.

Examples of the organic metal-based catalyst include: organic zinc compounds such as zinc octylate, zinc neodecanoate, and zinc naphthenate; organic tin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organic nickel compounds such as nickel octylate and nickel naphthenate; organic cobalt compounds such as cobalt octylate and cobalt naphthenate; organic bismuth compounds such as bismuth octoate, bismuth neodecanoate, and bismuth naphthenate; and titanium-based compounds such as a titanium chelate complex having, as a ligand, at least one of tetraisopropyloxytitanate, dibutyltitanium dichloride, tetrabutyl titanate, butoxytitanium trichloride, an aliphatic diketone, an aromatic diketone, and an alcohol having 2 to 10 carbon atoms.

Examples of the amine-based catalyst include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N'',N''-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compound include δ-valerolactam, ε-caprolactam, ω-enantholactam, η-capryllactam, and β-propiolactam. Among them, ε-caprolactam is more effective for accelerating curing.

Examples of the quaternary ammonium salt include a hydroxy salt, an alkyl acid salt, and a halide salt of alkyl ammonium and aromatic ammonium. Examples thereof include, but are not limited to, tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide.

(Acid Anhydride)

Examples of an acid anhydride include a cyclic aliphatic acid anhydride, an aromatic acid anhydride, and an unsaturated carboxylic acid anhydride, and these can be used alone or in combination of two or more kinds thereof. More specific examples include maleic acid anhydride, phthalic acid anhydride, trimellitic acid anhydride, pyromellitic acid anhydride, benzophenonetetracarboxylic acid anhydride, dodecenylsuccinic acid anhydride, polyadipic acid anhydride, polyazelaic acid anhydride, polysebacic acid anhydride, poly(ethyloctadecanedioic) acid anhydride, poly(phenylhexadecanedioic) acid anhydride, tetrahydrophthalic acid anhydride, methyltetrahydrophthalic acid anhydride, methylhexahydrophthalic acid anhydride, hexahydrophthalic acid anhydride, methylhimic acid anhydride, trialkyltetrahydrophthalic acid anhydride, methylcyclohexene dicarboxylic acid anhydride, methylcyclohexene tetracarboxylic acid anhydride, ethylene glycol bistrimellitate dianhydride, het acid anhydride, nadic acid anhydride, methylnadic acid anhydride, 5-(2,5-dioxotetrahydro-3-furanyl)-3-methyl-3-cyclohexane-1,2-dicarboxylic acid anhydride, 3,4-dicarboxy-1,2,3,4-tetrahydro-1-naphthalenesuccinic acid dianhydride, and 1-methyl-dicarboxy-1,2,3,4-tetrahydro-1-naphthalenesuccinic acid dianhydride.

In addition, as the acid anhydride, those obtained by modifying the above compound using a glycol may be used. Examples of the glycol that can be used for modification include: alkylene glycols such as ethylene glycol, propylene glycol, and neopentyl glycol; and polyether glycols such as a polyethylene glycol, a polypropylene glycol, and polytetramethylene ether glycol. Further, a copolymerized polyether glycol of two or more of these glycols and/or polyether glycols can also be used.

Alternatively, as the acid anhydride (B), a homopolymer or a copolymer of a compound having a polymerizable unsaturated group, such as maleic acid anhydride among the compounds described above, may be used. Examples of a compound copolymerizable with the compound having an acid anhydride group and a polymerizable unsaturated group include: α-olefins such as ethylene, propylene, 1,3-butadiene, and cyclopentylethylene; (meth)acrylic monomers such as (meth)acrylic acid and a (meth)acrylic acid ester; vinyl compounds having an aromatic ring such as styrene, 1-ethynyl-4-methylbenzene, divinylbenzene, 1-ethynyl-4-methylethylbenzene, benzonitrile, acrylonitrile, ptert-butylstyrene, 4-vinylbiphenyl, 4-ethynylbenzyl alcohol, 2-ethynylnaphthalene, and phenanthrene-9-ethynyl; and fluoroolefins such as vinylidene fluoride, tetrafluoroethylene, hexafluoropropylene, and chlorotrifluoroethylene, which may be used alone or in combination of two or more kinds thereof. It is preferable to use styrene and p-tert-butylstyrene, which are vinyl compounds having an aromatic ring.

(Coupling Agent)

Examples of a coupling agent include a silane coupling agent, a titanate-based coupling agent, and an aluminum-based coupling agent.

Examples of the silane coupling agent include: aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, bis[3-(trimethoxysilyl)propyl]amine, and bis[3-(triethoxysilyl)propyl]amine; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate-based coupling agent include tetraisopropoxy titanium, tetra-n-butoxy titanium, a butyl titanate dimer, tetrastearyl titanate, titanium acetylacetonate, titanium lactate, tetraoctylene glycol titanate, titanium lactate, and tetrastearoxy titanium.

Examples of the aluminum-based coupling agent include acetoalkoxyaluminum diisopropylate.

(Pigment)

A pigment is not particularly limited, and examples thereof include organic pigments and inorganic pigments such as an extender pigment, a white pigment, a black pigment, a gray pigment, a red pigment, a brown pigment, a green pigment, a blue pigment, a metal powder pigment, a luminescent pigment, and a pearlescent pigment, which are described in Handbook of Paint and Coating Raw Materials 1970 (edited by Japan Paint Manufacturers Association), and plastic pigments.

Examples of the extender pigment include precipitated barium sulfate, powdered sugar, precipitated calcium carbonate, calcium bicarbonate, white marble, white alumina, silica, hydrous fine powder silica (white carbon), ultrafine anhydrous silica (Aerosil), silica sand, talc, precipitated magnesium carbonate, bentonite, clay, kaolin, and ocher.

Specific examples of the organic pigments include: various insoluble azo pigments such as Benzidine Yellow, Hansa Yellow, and Lake Red 4R; soluble azo pigments such as Lake C, Carmine 6B, and Bordeaux 10; various (copper) phthalocyanine-based pigments such as phthalocyanine blue and phthalocyanine green; various chlorine dyeing lakes such as Rhodamine Lake and Methyl Violet Lake; various mordant dye-based pigments such as Quinoline Lake and Fast Sky Blue; various vat dye-based pigments such as an anthraquinone-based pigment, a thioindigo-based pigment, and a perinone-based pigment; various quinacridone-based pigments such as Cinquasia Red B; various dioxazine-based pigments such as Dioxazine Violet; various condensed azo pigments such as Cromophtal; and aniline black.

Examples of the inorganic pigments include: various chromates such as chrome yellow, zinc chromate, and molybdate orange; various ferrocyanide compounds such as Prussian blue; various metal oxides such as titanium oxide, zinc white, mapico yellow, iron oxide, red iron oxide, chromium oxide green, and zirconium oxide; various sulfides or selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powder pigments such as an aluminum powder, a gold powder, a silver powder, a copper powder, a bronze powder, and a brass powder; flake pigments and mica flake pigments of these metals; metallic pigments and pearl pigments such as a mica flake pigment in the form of being coated with a metal oxide and a mica-like iron oxide pigment; graphite; and carbon black.

Examples of the plastic pigments include "GRANDOLL PP-1000" and "PP-2000S" manufactured by DIC Corporation.

The pigment to be used may be appropriately selected according to the purpose, and for example, an inorganic oxide such as titanium oxide or zinc white is preferably used as the white pigment, and carbon black is preferably used as the black pigment in terms of excellent durability, weather resistance, and design properties.

The blending amount of the pigment with respect to 100 parts by mass of the total nonvolatile content of the polyisocyanate composition (X) and the polyol composition (Y) is, for example, 1 part by mass to 400 parts by mass, and is more preferably 10 parts by mass to 300 parts by mass in order to further improve the adhesiveness and the blocking resistance.

(Plasticizer)

Examples of the plasticizer include a phthalic acid-based plasticizer, a fatty acid-based plasticizer, an aromatic polycarboxylic acid-based plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include: phthalic acid ester-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl) isophthalate, and diisooctyl isophthalate; and tetrahydrophthalic acid ester-based plasticizers such as di-(2-ethylhexyl) tetrahydrophthalate, di-n-octyl tetrahydrophthalate, and diisodecyl tetrahydrophthalate.

Examples of the fatty acid-based plasticizer include: adipic acid-based plasticizers such as di-n-butyl adipate, di-(2-ethylhexyl) adipate, diisodecyl adipate, diisononyl adipate, di(C6-C10 alkyl) adipate, and dibutyl diglycol adipate; azelaic acid-based plasticizers such as di-n-hexyl azelate, di-(2-ethylhexyl) azelate, and diisooctyl azelate; sebacic acid-based plasticizers such as di-n-butyl sebacate, di-(2-ethylhexyl) sebacate, and diisononyl sebacate; maleic acid-based plasticizers such as dimethyl maleate, diethyl maleate, di-n-butyl maleate, and di-(2-ethylhexyl) maleate; fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetyl ricinoleate, butyl acetyl ricinoleate, glyceryl monoricinoleate, and diethylene glycol monoricinoleate; and other fatty acid-based plasticizers such as diethylene glycol monolaurate, diethylene glycol dipelargonate, and pentaerythritol fatty acid esters.

Examples of the aromatic polycarboxylic acid-based plasticizer include: trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and pyromellitic acid-based plasticizers such as tetra-(2-ethylhexyl) pyromellitate and tetra-n-octyl pyromellitate.

Examples of the phosphoric acid-based plasticizer include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizer include: glycol-based plasticizers such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutylmethylene bisthioglycolate; and glycerin-based plasticizers such as glycerol monoacetate, glycerol triacetate, and glycerol tributyrate.

Examples of the epoxy-based plasticizer include an epoxidized soybean oil, epoxy butyl stearate, epoxy di-2-ethylhexyl hexahydrophthalate, epoxy diisodecyl hexahydrophthalate, epoxy triglyceride, epoxidized octyl oleate, and epoxidized decyl oleate.

Examples of the polyester-based plasticizer include an adipic acid-based polyester, a sebacic acid-based polyester, and a phthalic acid-based polyester.

Examples of the carbonate-based plasticizer include propylene carbonate and ethylene carbonate.

In addition, other examples of the plasticizer include a partially hydrogenated terphenyl, an adhesive plasticizer, and a polymerizable plasticizer such as diallyl phthalate and an acrylic monomer or oligomer. These plasticizers can be used alone or in combination of two or more kinds thereof.

(Form of Adhesive)

The two-component curable adhesive according to the present invention may be either a solvent type adhesive or a solventless adhesive. Note that, in the present description, the "solvent type" adhesive refers to a form for use in a so-called dry lamination method, that is, a method of coating a substrate with an adhesive, then heating the adhesive in an oven or the like to volatilize an organic solvent in a coating film, and then adhering the substrate to another substrate. One or both of the polyisocyanate composition (X) and the polyol composition (Y) contain an organic solvent capable of dissolving (diluting) constituent components of the polyisocyanate composition (X) and the polyol composition (Y) used in the present invention.

Examples of the organic solvent include: esters such as ethyl acetate, butyl acetate, and cellosolve acetate; ketones such as acetone, methyl ethyl ketone, isobutyl ketone, and cyclohexanone; ethers such as tetrahydrofuran and

dioxane; aromatic hydrocarbons such as toluene and xylene; halogenated hydrocarbons such as methylene chloride and ethylene chloride; dimethyl sulfoxide; and dimethyl sulfamide. The organic solvent used as a reaction medium during the production of the constituent components of the polyisocyanate composition (X) and the polyol composition (Y) may be further used as a diluent during coating.

In the present description, the "solventless" adhesive refers to a form of an adhesive for use in a so-called non-solvent lamination method, that is, a method of substantially not incorporating, into the polyisocyanate composition (X) and the polyol composition (Y), a highly soluble organic solvent such as esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, dimethyl sulfoxide, and dimethyl sulfamide, particularly ethyl acetate or methyl ethyl ketone, coating a substrate with the adhesive, and then adhering the substrate to another substrate without a step of volatilizing the solvent by heating in an oven or the like. In the case where the organic solvent used as the reaction medium is not completely removed during the production of the constituent components of the polyisocyanate composition (X) or the polyol composition (Y) and the raw materials thereof, and a small amount of the organic solvent remains in the polyisocyanate composition (X) or the polyol composition (Y), it is understood that the organic solvent is not substantially contained. In addition, in the case where the polyol composition (Y) contains a low molecular weight alcohol, the low molecular weight alcohol reacts with the polyisocyanate composition (X) to form a part of the coating film. Therefore, it is not necessary to volatilize the low molecular weight alcohol after coating. Therefore, such a form is also treated as a solventless adhesive, and a low molecular weight alcohol is not regarded as an organic solvent.

The two-component curable adhesive according to the present invention is preferably blended and used such that the ratio [NCO]/[OH] of the number of moles of the isocyanate group contained in the polyisocyanate composition (X) [NCO] to the number of moles of the hydroxy group contained in the polyol composition (Y) [OH] is 0.5 to 5.0, and more preferably 1.0 to 3.0. Accordingly, appropriate curability can be obtained without depending on the environmental humidity during coating.

<Laminate>

A laminate according to the present invention is obtained by, for example, a method including a two-component mixing step of mixing the polyisocyanate composition (X) and the polyol composition (Y) in advance, then coating a first substrate with the mixture, then laminating a second substrate on the coating surface, and curing an adhesive layer, or a method including a two-component separate coating step of respectively coating a first substrate and a second substrate with the polyisocyanate composition (X) and the polyol composition (Y), then bringing the coating surfaces into contact with each other, performing pressure bonding to laminate the first substrate and the second substrate, and curing an adhesive layer. The film to be used is not particularly limited, and a film can be appropriately selected according to the application.

Examples of a film for food packaging include a polyethylene terephthalate (PET) film, a polystyrene film, a polyamide film, a polyacrylonitrile film, a polyethylene film (LLDPE: low density polyethylene film, HDPE: high density polyethylene film, MDOPE: uniaxially oriented polyethylene film, OPE: biaxially oriented polyethylene film), a polypropylene film (CPP: non-oriented polypropylene film, OPP: biaxially oriented polypropylene film), a polyolefin film such as a heat sealable film having a gas barrier property in which an olefin-based heat sealable resin layer is provided on one surface or both surfaces of a resin having a gas barrier property such as an ethylene vinyl alcohol copolymer and a polyvinyl alcohol, a polyvinyl alcohol film, and an ethylene-vinyl alcohol copolymer film.

In addition, it is preferable to use a biomass film, a biodegradable film, or a recycled plastic film formed of a material containing a biomass-derived component, a biodegradable component, or a recycled component.

The biomass film, the biodegradable film, and the recycled plastic film are commercially available from various companies, and for example, films certified in each country, such as a film sheet listed in a list of certified biomass products described in Japan Organics Recycling Association, a film listed in a list of ECO Mark-certified products described in Japan Environment Association, and a film having a symbol mark defined by Japan Bioplastic Association, can be used.

(Biomass Film)

Specific examples of the well-known biomass film include those using a biomass-derived ethylene glycol as a raw material. The biomass-derived ethylene glycol is obtained by using, as a raw material, ethanol (biomass ethanol) produced using a biomass as a raw material. For example, the biomass-derived ethylene glycol can be obtained according to a method of producing ethylene glycol from biomass ethanol via ethylene oxide according to a known method. In addition, commercially available biomass ethylene glycol may be used, and for example, biomass ethylene glycol commercially available from India Glycols Limited can be suitably used.

For example, a film containing a biomass polyethylene terephthalate, a biomass polyester containing biomass-derived ethylene glycol as a diol unit and a fossil fuel-derived dicarboxylic acid as a dicarboxylic acid unit, or the like is

known as an alternative to a polyethylene terephthalate film containing a petroleum-based raw material in the related art.

As the dicarboxylic acid unit in the biomass polyester, a fossil fuel-derived dicarboxylic acid is used. As the dicarboxylic acid, an aromatic dicarboxylic acid, an aliphatic dicarboxylic acid, and a derivative thereof can be used without limitation.

In addition, use may be made to a copolymerized polyester, which is obtained by adding, in addition to the diol component and the dicarboxylic acid component described above, a copolymerization component as a third component, such as at least one kind of polyfunctional compound selected from the group consisting of a bifunctional oxycarboxylic acid, a trifunctional or higher functional polyhydric alcohol for forming a crosslinked structure, a trifunctional or higher functional polycarboxylic acid and/or an acid anhydride thereof, and a trifunctional or higher functional oxycarboxylic acid.

In addition, for example, a biomass polyolefin-based film such as a biomass polyethylene-based film containing a polyethylene-based resin containing biomass-derived ethylene glycol as a raw material, a biomass polyethylene polypropylene-based film, or the like is also known as an alternative to a polyolefin-based film containing a petroleum-based raw material in the related art.

The polyethylene-based resin is not particularly limited except that the biomass-derived ethylene glycol is used as a part of the raw material, and examples thereof include a homopolymer of ethylene and a copolymer of ethylene and an $\alpha$-olefin which contains ethylene as a main component (an ethylene-$\alpha$-olefin copolymer containing 90 mass% or more of an ethylene unit), and these can be used alone or in combination of two or more kinds thereof.

Note that, the $\alpha$-olefin constituting the copolymer of ethylene and an $\alpha$-olefin is not particularly limited, and examples thereof include $\alpha$-olefins having 4 to 8 carbon atoms such as 1-butene, 4-methyl-1-pentene, 1-hexene, and 1-octene. Known polyethylene resins such as a low density polyethylene resin, a medium density polyethylene resin, and a linear low density polyethylene resin can be used. Among them, a linear low density polyethylene resin (LLDPE) (a copolymer of ethylene and 1-hexene or a copolymer of ethylene and 1-octene) is preferred, and a linear low density polyethylene resin having a density of 0.910 g/cm$^3$ to 0.925 g/cm$^3$ is more preferred, from the viewpoint of further preventing damage such as holes or fracture even when films rub against each other.

As the biomass film, one containing a biomass raw material distinguished by a biomass plastic degree defined in ISO16620 or ASTMD6866 is also distributed. Radioactive carbon 14C is present in the atmosphere at a proportion of 1 in 1012 atoms, and this proportion does not change even with carbon dioxide in the atmosphere. Therefore, this proportion does not change among plants in which carbon dioxide is immobilized by photosynthesis. Therefore, carbon in a plant-derived resin contains radioactive carbon 14C. In contrast, carbon in a fossil fuel-derived resin contains almost no radioactive carbon 14C. Therefore, the content proportion of the plant-derived resin in the resin, that is, the biomass plastic degree, can be determined by measuring the concentration of the radioactive carbon 14C in the resin using an accelerator mass spectrometer.

Examples of a plant-derived low density polyethylene, which is a biomass plastic having a biomass plastic degree, as defined in ISO16620 or ASTM D6866, of 80% or more, preferably 90% or more, include trade names "SBC818", "SPB608", "SBF0323HC", "STN7006", "SEB853", and "SPB681" manufactured by Braskem, and films containing these as raw materials can be suitably used.

In addition, films and sheets containing starch or polylactic acid as a biomass raw material are also known. These can be appropriately selected and used according to the application.

The biomass film may be a laminate of a plurality of biomass films or a laminate of a petroleum-based film in the related art and a biomass film. In addition, the biomass film may be a non-oriented film or an oriented film, and the production method thereof is not limited.

(Biodegradable Film)

Specific examples of the well-known biodegradable film include those containing a generally available biodegradable resin as a raw material. Examples thereof include a polycaprolactone, a polyvinyl alcohol, a polyamide, a cellulose ester, a lactic acid-based polyester-based resin, an aliphatic polyester-based resin, or an aliphatic aromatic polyester-based resin. These biodegradable resins may be used alone or in combination of two or more kinds thereof. Among them, an aliphatic polyester-based resin or an aliphatic aromatic polyester-based resin is preferably used.

Examples of the aliphatic polyester-based resin include an aliphatic polyester obtained by a polycondensation reaction between an aliphatic diol and an aliphatic dicarboxylic acid. Examples of the aliphatic diol include ethylene glycol, 1,3-propanediol, 1,4-butanediol, 1,5-pentanediol, 1,6-hexanediol, 1,4-cyclohexanediol, and 1,4-cyclohexanedimethanol. These may be used alone, or a mixture thereof may be used. Among them, 1,4-butanediol is preferably used. Examples of the aliphatic dicarboxylic acid include oxalic acid, succinic acid, glutaric acid, adipic acid, sebacic acid, suberic acid, and dodecanedioic acid, and an acid anhydride as a derivative thereof may be used. Among them, succinic acid, succinic acid anhydride, or a mixture thereof with adipic acid is preferred.

Specific examples thereof include polybutylene succinate (PBS) obtained from 1,4-butanediol and succinic acid (for example, BioPBS manufactured by PPT MCC BIOCHEM CO., LTD.) and polybutylene succinate adipate (PBSA)

obtained by copolymerizing adipic acid with PBS.

Examples of the aliphatic aromatic polyester-based resin include a copolymer containing an aliphatic dicarboxylic acid unit, an aromatic dicarboxylic acid unit, and a chain aliphatic and/or alicyclic diol unit. The diol component that provides the diol unit generally has 2 to 10 carbon atoms, and examples thereof include ethylene glycol, 1,3-propanediol, 1,4-butanediol, and 1,4-cyclohexanedimethanol. Among them, a diol having 2 to 4 carbon atoms is preferred, ethylene glycol and 1,4-butanediol are preferred, and 1,4-butanediol is more preferred. The dicarboxylic acid component that provides the dicarboxylic acid unit generally has 2 to 10 carbon atoms, and examples thereof include succinic acid, adipic acid, suberic acid, sebacic acid, and dodecanedioic acid. Among them, succinic acid or adipic acid is preferred. Examples of the aromatic dicarboxylic acid component that provides the aromatic dicarboxylic acid unit include terephthalic acid, isophthalic acid, and naphthalenedicarboxylic acid. Among them, terephthalic acid and isophthalic acid are preferred, and terephthalic acid is more preferred.

Specific examples thereof include PBAT which is a copolymer of 1,4-butanediol, adipic acid, and terephthalic acid (for example, Ecoflex manufactured by BASF Corporation).

Other examples include a poly(3-hydroxyalkanoate), which is an aliphatic polyester copolymer obtained from a hydroxyalkanoic acid and a polycarboxylic acid (among them, poly(3-hydroxybutyrate-co-3-hydroxyhexanoate) (PHBH) (for example, AONILEX manufactured by Kaneka Corporation), and polylactic acid (PLA) (for example, REVODE manufactured by Zhejiang HISUN Biomaterials Co., Ltd., and Ingeo manufactured by Nature Works Co., Ltd.).

The biodegradable film may be a laminate obtained by laminating a plurality of biodegradable films, or may be a laminate of a petroleum-based film in the related art and a biodegradable film. In addition, the biodegradable film may be a non-oriented film or an oriented film, and the production method thereof is not limited.

The film may be subjected to an orientation treatment. As the orientation treatment method, it is common that the resin is melt-extruded into a sheet shape according to an extrusion film forming method or the like, and is then subjected to simultaneous biaxial orientation or sequential biaxial orientation. In addition, in the case of the sequential biaxial orientation, it is common to first perform a longitudinal orientation treatment and then transverse orientation. Specifically, a method of combining longitudinal orientation utilizing a difference in speed between rolls and transverse orientation using a tenter is often used.

A film surface may be subjected to various surface treatments such as a flame treatment and a corona discharge treatment as necessary, so as to form an adhesive layer without defects such as film breakage and repelling.

Alternatively, a film obtained by laminating a vapor-deposited layer of a metal such as aluminum, silica, or a metal oxide such as alumina, or a barrier film having a gas barrier layer containing a polyvinyl alcohol, an ethylene-vinyl alcohol copolymer, vinylidene chloride, or the like may be used in combination. When such a film is used, a laminate having a barrier property against a water vapor, oxygen, an alcohol, an inert gas, a volatile organic substance (scent), or the like can be obtained.

Paper is not particularly limited, and a known paper substrate can be used. Specifically, the paper is produced using a natural fiber for papermaking such as a wood pulp using a known papermaking machine, and the papermaking conditions are not particularly specified. Examples of the natural fiber for papermaking include wood pulps such as a softwood pulp and a hardwood pulp, non-wood pulps such as a Manila hemp pulp, a sisal hemp pulp, and a flax pulp, and pulps obtained by chemically modifying these pulps. As the kind of the pulp, chemical pulps produced by using a sulfate cooking method, an acidic/neutral/alkaline sulfite cooking method, a soda cooking method, or the like, a ground pulp, a chemi-ground pulp, a thermomechanical pulp, or the like can be used. In addition, commercially available high quality paper, coated paper, backing paper, impregnated paper, cardboard, paperboard, or the like can also be used.

Examples of a more specific configuration of the laminate include, but are not limited to,

(1) substrate 1/adhesive layer 1/sealant film,
(2) substrate 1/adhesive layer 1/metal vapor-deposited non-oriented film,
(3) substrate 1/adhesive layer 1/metal vapor-deposited oriented film,
(4) transparent vapor-deposited oriented film/adhesive layer 1/sealant film,
(5) substrate 1/adhesive layer 1/substrate 2/adhesive layer 2/sealant film,
(6) substrate 1/adhesive layer 1/metal vapor-deposited oriented film/adhesive layer 2/sealant film,
(7) substrate 1/adhesive layer 1/transparent vapor-deposited oriented film/adhesive layer 2/sealant film,
(8) substrate 1/adhesive layer 1/metal layer/adhesive layer 2/sealant film,
(9) substrate 1/adhesive layer 1/substrate 2/adhesive layer 2/metal layer/adhesive layer 3/sealant film, and
(10) substrate 1/adhesive layer 1/metal layer/adhesive layer 2/substrate 2/adhesive layer 3/sealant film.

Examples of the substrate 1 for use in the configuration (1) include an MDOPE film, an OPE film, an OPP film, a PET film, a nylon film, and paper. In addition, as the substrate 1, a substrate on which a coating is applied for the purpose of improving the gas barrier property, the ink receptivity when providing a printing layer to be described later may be used. Examples of a commercially available product of the substrate film 1 subjected to coating include a K-OPP film, a K-PET

film, and a K-nylon film. The adhesive layer 1 is a cured layer of the adhesive according to the present invention. Examples of the sealant film include a CPP film, an LLDPE film, an easily openable heat sealable film, and a heat sealable film having a gas barrier property. A printing layer may be provided on the surface of the substrate 1 on the adhesive layer 1 side (the surface of the coating layer on the adhesive layer 1 side in the case where the substrate film 1 subjected to coating is used) or the surface opposite to the adhesive layer 1. The printing layer is formed of various printing inks such as a gravure ink, a flexographic ink, an offset ink, a stencil ink, and an inkjet ink by using a general printing method commonly used for printing on a polymer film or paper in the related art.

Examples of the substrate 1 for use in the configurations (2) and (3) include an MDOPE film, an OPE film, an OPP film, a PET film, and paper. The adhesive layer 1 is a cured layer of the adhesive according to the present invention. Examples of the metal vapor-deposited non-oriented film include a VM-CPP film and a VM-LLDPE film obtained by vapor-depositing a metal such as aluminum on a CPP film, an LLDPE film, or a heat sealable film having a gas barrier property. Examples of the metal vapor-deposited oriented film include a VM-MDOPE film, a VM-OPE film, and a VM-OPP film obtained by vapor-depositing a metal such as aluminum on an MDOPE film, an OPE film, and an OPP film. Similar to the configuration (1), the printing layer may be provided on either surface of the substrate 1.

Examples of the transparent vapor-deposited oriented film for use in the configuration (4) include a film obtained by vapor-depositing silica or alumina on an MDOPE film, an OPE film, an OPP film, a PET film, a nylon film, or the like. For the purpose of protecting the inorganic vapor-deposited layer of silica or alumina, a film subjected to coating on the vapor-deposited layer may be used. The adhesive layer 1 is a cured layer of the adhesive according to the present invention. Examples of the sealant film are the same as those in the configuration (1). A printing layer may be provided on the surface of the transparent vapor-deposited oriented film on the adhesive layer 1 side (the surface of the coating layer on the adhesive layer 1 side in the case where a film subjected to coating on the inorganic vapor-deposited layer is used). A method of forming the printing layer is the same as that in the configuration (1).

Examples of the substrate 1 for use in the configuration (5) include a PET film and paper. Examples of the substrate 2 include a nylon film. At least one of the adhesive layer 1 and the adhesive layer 2 is a cured layer of the adhesive according to the present invention. Examples of the sealant film are the same as those in the configuration (1). Similar to the configuration (1), the printing layer may be provided on either surface of the substrate 1.

Examples of the substrate 1 in the configuration (6) are the same as those in the configurations (2) and (3). Examples of the metal vapor-deposited oriented film include a VM-MDOPE film, a VM-OPE film, a VM-OPP film, and a VM-PET film obtained by respectively vapor-depositing a metal such as aluminum on an MDOPE film, an OPE film, an OPP film, and a PET film. At least one of the adhesive layer 1 and the adhesive layer 2 is a cured layer of the adhesive according to the present invention. Examples of the sealant film are the same as those in the configuration (1). Similar to the configuration (1), the printing layer may be provided on either surface of the substrate 1.

Examples of the substrate 1 in the configuration (7) include a PET film and paper. Examples of the transparent vapor-deposited oriented film are the same as those in the configuration (4). At least one of the adhesive layers 1 and 2 is a cured layer of the adhesive according to the present invention. Examples of the sealant film are the same as those in the configuration (1). Similar to the configuration (1), the printing layer may be provided on either surface of the substrate 1.

Examples of the substrate 1 in the configuration (8) include a PET film and paper. Examples of the metal layer include an aluminum foil. At least one of the adhesive layers 1 and 2 is a cured layer of the adhesive according to the present invention. Examples of the sealant film are the same as those in the configuration (1). Similar to the configuration (1), the printing layer may be provided on either surface of the substrate 1.

Examples of the substrate 1 in the configurations (9) and (10) include a PET film and paper. Examples of the substrate 2 include a nylon film. Examples of the metal layer include an aluminum foil. At least one of the adhesive layers 1, 2, and 3 is a cured layer of the adhesive according to the present invention. Examples of the sealant film are the same as those in the configuration (1). Similar to the configuration (1), the printing layer may be provided on either surface of the substrate 1.

Since the adhesive according to the present invention has excellent adhesion to the metal substrate or the metal vapor-deposited layer, the adhesive is particularly suitably used for producing the configurations (2), (3), (6), and (8) to (10). Among these configurations, the adhesive layer in contact with the metal substrate or the metal vapor-deposited layer is preferably a cured layer of the adhesive according to the present invention.

In the case where the adhesive according to the present invention is used as an adhesion auxiliary agent, a film material serving as a substrate is coated with the adhesion auxiliary agent according to the present invention using a roll such as a gravure roll, an organic solvent is volatilized by heating in an oven or the like, and then the polymer material melted by an extruder is laminated to obtain the laminate according to the present invention.

The laminate according to the present invention may further include other films and substrates in addition to the configurations (1) to (10) described above. As other substrates, in addition to the oriented film, the non-oriented film, and the transparent vapor-deposited film described above, a porous substrate such as paper to be described later, wood, and leather can also be used. The adhesive used for adhering other substrates may or may not be the adhesive according to the present invention.

The "other layers" may contain a known additive or stabilizer, for example, an antistatic agent, an easy-adhesion coating agent, a plasticizer, a lubricant, or an antioxidant. In addition, the "other layers" may be one obtained by subjecting the surface of the film to a corona treatment, a plasma treatment, an ozone treatment, a chemical treatment, a solvent treatment, or the like as a pretreatment in order to improve the adhesion in the case of being laminated with other materials.

The laminate according to the present invention can be suitably used in various applications, for example, packaging materials for foods, pharmaceuticals, and daily necessities, lid materials, paper tableware such as a paper straw, a paper napkin, a paper spoon, a paper plate, and a paper cup, outdoor industrial applications such as a wall protection material, a roofing material, a solar cell panel material, a battery packaging material, a window material, an outdoor flooring material, a lighting protection material, an automobile member, a signboard, and a sticker, decorative sheets for use in injection molding simultaneous decorating methods, and packaging materials for a liquid laundry detergent, a liquid kitchen detergent, a liquid bath detergent, a liquid bath soap, a liquid shampoo, and a liquid conditioner.

<Packaging Material>

The laminate according to the present invention can be used as a multilayer packaging material for the purpose of protecting foods, pharmaceuticals, and the like. In the case of being used as a multilayer packaging material, the layer configuration of the laminate may change depending on the content, the use environment, and the use form. In addition, a packaging body according to the present invention may be appropriately subjected to an easy-opening treatment or provided with a resealing unit.

As an example of a specific form of the packaging material according to the present invention, for example, a packaging material obtained by forming, into a bag, a laminate including a sealant film, such as configuration examples (1) and (4) to (10) of the laminate described above, is exemplified. The laminate is folded or overlapped such that the surfaces of the inner layers thereof (the surfaces of the sealant films) face each other, and the peripheral complete portions thereof are heat-sealed to form a bag shape. Examples of a bag forming method include a heat sealing method in the form of a side surface seal type, a two-side seal type, a three-side seal type, a four-side seal type, an envelope seal type, a butt-seam seal type, a pleated seal type, a flat bottom seal type, a square bottom seal type, a gusset type, and other heat seal types. The packaging material according to the present invention can take various forms depending on the content, the use environment, and the use form. A self-supporting packaging material (standing pouch) or the like can also be used. Examples of the heat sealing method include known methods such as bar sealing, rotary roll sealing, belt sealing, impulse sealing, high-frequency sealing, and ultrasonic sealing.

A product using the packaging material according to the present invention is produced by filling the packaging material according to the present invention with the content through an opening and then heat-sealing the opening. Examples of the content for filling include foods, for example, confections such as rice crackers, bean snacks, nuts, biscuits, cookies, wafers, marshmallows, pies, soft-baked cakes, candies, and snacks, staple foods such as bread, snack noodles, instant noodles, dried noodles, pasta, aseptically packaged cooked rice, Japanese rice porridge, rice porridge, packaged rice cakes, and cereal foods, agricultural products such as pickles, boiled beans, natto, miso, frozen tofu, tofu, nametake mushrooms, konjac, processed wild vegetables, jams, peanut cream, salads, frozen vegetables, and processed potatoes, processed livestock products such as hams, bacon, sausages, processed chicken products, and corned beef, processed seafood products such as fish ham and sausages, fish paste products, kamaboko, seaweed, tsukudani, bonito flakes, salted fish, smoked salmon, and karashi mentaiko, fruit pulps such as peaches, mandarin oranges, pineapples, apples, pears, and cherries, vegetables such as corns, asparagus, mushrooms, onions, carrots, radishes, and potatoes, prepared foods such as frozen and chilled prepared foods, including hamburgers, meatballs, fried seafood, gyoza, and croquettes, dairy products such as butter, margarine, cheese, creams, instant cream powders, and infant formula, liquid seasonings, instant curry, and pet foods.

In addition, various packaging materials can also be used for non-foods, and examples thereof include tobacco, disposable body warmers, pharmaceuticals such as infusion packs, liquid laundry detergents, liquid kitchen detergents, liquid bath detergents, liquid bath soaps, liquid shampoos, liquid conditioners, cosmetics such as lotions and emulsions, vacuum insulating materials, and batteries.

## Examples

Hereinafter, the present invention will be described in more detail with reference to specific Synthesis Examples and Examples, but the present invention is not limited to these Examples. Note that, in the following examples, "part" and "%" represent "part by mass" and "mass%", respectively, unless otherwise specified.

<Polyurethane Polyisocyanate (A1)>

(Example 1)

(Polyurethane Polyisocyanate (A1-1))

(Step (1))

A reaction of 185 parts of tolylene diisocyanate (TDI), 15 parts of a bifunctional polypropylene glycol having a molecular weight of 2,000 g/mol (VORANOL2120 manufactured by DOW Inc.) (hereinafter, referred to as PPG2000D), 60 parts of a bifunctional polypropylene glycol having a molecular weight of 1,000 g/mol (EXCENOL 1020 manufactured by AGC Inc.) (hereinafter, referred to as PPG1000D), 85 g of a bifunctional polyethylene glycol having a molecular weight of 400 g/mol (manufactured by Sanyo Chemical Industries, Ltd.) (hereinafter, referred to as PEG400D), and 0.13 parts of polyphosphoric acid (content when polymerization degree n = 2 to 5 was 5%) under a nitrogen stream at 80°C was continued until the NCO% no longer changed, to obtain a composition containing a polyurethane polyisocyanate (A1-1) and the unreacted TDI.

(Step (2))

The obtained composition was transferred to a thin film distillation apparatus and purified under conditions of a pressure of about 0.02 Torr and a temperature of 150°C until the TDI in the composition reached 0.06 mass% to obtain a polyisocyanate composition (X-1). The calculated content of polyphosphoric acid was 500 ppm of the polyurethane polyisocyanate (A1-1).

(Example 2) to (Example 8)

(Polyurethane Polyisocyanates (A1-2) to (A1-8))

Polyurethane polyisocyanates (A1-2) to (Al-8) were obtained in the same manner as for the polyurethane polyisocyanate (A1-1), except that the raw materials and the contents of polyphosphoric acid were changed to those shown in Table 1.

(Comparative Example 1) to (Comparative Example 8)

(Polyurethane Polyisocyanates (A1'-1) to (A1'-8))

Polyurethane polyisocyanates (A1'-1) to (A1'-8) were obtained in the same manner for the polyurethane polyisocyanate (A1-1), except that the raw materials and the contents of polyphosphoric acid were changed to those shown in Table 2.

Note that, the details of the compounds in Tables 1 and 2 are as follows.

TDI: tolylene diisocyanate
HDI: hexamethylene diisocyanate
MDI50: diphenylmethane diisocyanate (mixture of 4,4'-MDI and 2,4'-MDI isomers)
PPG400D: bifunctional polypropylene glycol having molecular weight of 400 g/mol
PPG1000D: bifunctional polypropylene glycol having molecular weight of 1,000 g/mol
PPG2000D: bifunctional polypropylene glycol having molecular weight of 2,000 g/mol

In addition, the "content (%) when n = 2 to 5" in Tables 1 and 2 is the proportion of the compound (B1) occupying the polyphosphoric acid (B) used in the synthesis.

[Table 1]

| | Example | | | | | | | |
|---|---|---|---|---|---|---|---|---|
| | 1 | 2 | 3 | 4 | 5 | 6 | 7 | 8 |
| | (A1-1) | (A1-2) | (A1-3) | (A1-4) | (A1-5) | (A1-6) | (A1-7) | (A1-8) |
| TDI | 185 | 185 | 185 | 185 | | | | |
| MDI50 | | | | | 240 | 240 | 240 | 240 |
| PEG400D | 85 | 85 | 85 | 85 | 75 | 75 | 75 | 75 |
| PPG1000D | 60 | 60 | 60 | 60 | 25 | 25 | 25 | 25 |

(continued)

| | Example | | | | | | | |
|---|---|---|---|---|---|---|---|---|
| | 1 | 2 | 3 | 4 | 5 | 6 | 7 | 8 |
| | (A1-1) | (A1-2) | (A1-3) | (A1-4) | (A1-5) | (A1-6) | (A1-7) | (A1-8) |
| PPG2000D | 15 | 15 | 15 | 15 | 40 | 40 | 40 | 40 |
| Polyphosphoric acid (B) | 0.13 | 0.13 | 0.78 | 0.78 | 0.13 | 0.13 | 0.78 | 0.78 |
| Content (ppm) of polyphosphoric acid (B) | 500 | 500 | 3000 | 3000 | 500 | 500 | 3000 | 3000 |
| Content (%) when n = 2 to 5 | 5 | 70 | 5 | 70 | 5 | 70 | 5 | 70 |

[Table 2]

| | Comparative Example | | | | | | | |
|---|---|---|---|---|---|---|---|---|
| | 1 | 2 | 3 | 4 | 5 | 6 | 7 | 8 |
| | (A'1-1) | (A'1-2) | (A'1-3) | (A'1-4) | (A'1-5) | (A'1-6) | (A'1-7) | (A'1-8) |
| TDI | 185 | 185 | 185 | 185 | | | | |
| MDI50 | | | | | 240 | 240 | 240 | 240 |
| PEG400D | 85 | 85 | 85 | 85 | 75 | 75 | 75 | 75 |
| PPG1000D | 60 | 60 | 60 | 60 | 25 | 25 | 25 | 25 |
| PPG2000D | 15 | 15 | 15 | 15 | 40 | 40 | 40 | 40 |
| Polyphosphoric acid (B) | 0.013 | 0.013 | 1.69 | 1.69 | 0.013 | 0.013 | 1.69 | 1.69 |
| Content (ppm) of polyphosphoric acid (B) | 50 | 50 | 6500 | 6500 | 50 | 50 | 6500 | 6500 |
| Content (%) when n = 2 to 5 | 0 | 100 | 0 | 100 | 0 | 100 | 0 | 100 |

<Evaluation>

(Gardner Color)

The composition after the completion of the step (1) and the polyurethane polyisocyanate (A1) after the completion of the step (2) were separately taken into a test tube made of a flat-bottomed colorless hard glass, having an inner diameter of 10.75 ± 0.1 mm and a length of 112 ± 1 mm, and the Gardner color was measured using TZ-6000 manufactured by NIPPON DENSHOKU INDUSTRIES Co., Ltd. Evaluation was performed in four stages according to the following criteria. The results are summarized in Tables 3 and 4.

A: less than 3

B: 3 or more and less than 4

C: 4 or more and less than 6

D: 6 or more

(NCO%)

A sample (5 g) was weighed into a 300 mL stoppered Erlenmeyer flask that had been dried clean, and 15 mL of dehydrated ethyl acetate was added thereto using a graduated cylinder to dissolve the sample. After complete dissolution, 10 mL of a 1 mol/l di-n-butylamine toluene solution was added using a hole pipette, followed by mixing well and leaving at room temperature for 20 minutes or longer, and then about 30 mL of methanol was added thereto using a graduated cylinder. A bromophenol blue indicator was added in an amount of 7 drops to 8 drops, followed by titrating using a 0.5 mol/l

hydrochloric acid aqueous solution, and a point at which the color was changed from purple to yellow was regarded as an end point. At the same time, a blank test was performed, the NCO% (measured value) was calculated according to the following equation, and was rounded to the second decimal place to obtain a measured value.

[Math. 1]

$$\text{NCO\% (MEASURED VALUE)} = \frac{(B - T) \times F \times 0.5 \times 42.02}{S \times 1000} \times 100$$

B: titration amount (mL) of 0.5 mol/l hydrochloric acid aqueous solution required for blank test
T: titration amount (mL) of 0.5 mol/l hydrochloric acid aqueous solution required for the present test
F: potency of 0.5 mol/l hydrochloric acid aqueous solution
S: sample collection amount (g)

In addition, based on the charged amounts of the isocyanate and the polyol used in the synthesis of the polyurethane polyisocyanate (A1), the NCO% (theoretical value) in the case where it was assumed that an equimolar amount of the isocyanate reacted with the hydroxy group in the polyol (since the reaction was performed in a system in which an excessive amount of the isocyanate group was present with respect to the hydroxy group, a reaction in which the polyol formed a urethane bond at the terminal of the isocyanate did not occur) was calculated. The NCO% (measured value) and the NCO% (theoretical value) were compared with each other and evaluated in three stages according to the following evaluation criteria. The results are summarized in Tables 3 and 4.

A: a difference between the theoretical value and the measured value is less than 0.2%

B: the difference between the theoretical value and the measured value is 0.2% or more and less than 0.4%

C: the difference between the theoretical value and the measured value is 0.4% or more

[Table 3]

| | | Example | | | | | | | |
|---|---|---|---|---|---|---|---|---|---|
| | | 1 | 2 | 3 | 4 | 5 | 6 | 7 | 8 |
| | | (A1-1) | (A1-2) | (A1-3) | (A1-4) | (A1-5) | (A1-6) | (A1-7) | (A1-8) |
| Gardner color | Step (1) | A | A | A | A | A | A | A | A |
| | Step (2) | A | A | A | A | A | A | A | A |
| NCO% (%) | Step (1) | B | B | A | A | B | B | A | A |
| | Step (2) | B | A | A | A | B | B | A | A |

[Table 4]

| | | Comparative Example | | | | | | | |
|---|---|---|---|---|---|---|---|---|---|
| | | 1 | 2 | 3 | 4 | 5 | 6 | 7 | 8 |
| | | (A'1-1) | (A'1-2) | (A'1-3) | (A'1-4) | (A'1-5) | (A'1-6) | (A'1-7) | (A'1-8) |
| Gardner color | Step (1) | A | B | B | C | A | B | B | C |
| | Step (2) | A | B | C | D | A | C | C | D |
| NCO% (%) | Step (1) | C | C | C | A | C | C | C | A |
| | Step (2) | C | C | C | A | C | C | C | A |

<Adhesive>

(Preparation of Adhesive)

The polyurethane polyisocyanate (A1-1) was used as the polyisocyanate composition (X-1), and a mixture obtained by mixing a polyester polyol having a molecular weight of 600 g/mol and DESMOPHEN4051B (manufactured by COVESTRO) at a mass ratio of 94:6 was used as the polyol composition (Y), which were mixed at a blending ratio shown in Table 5 to prepare a two-component curable adhesive in Example 1.

Adhesives in Examples 2 to 8 and Comparative Examples 1 to 8 were prepared in the same manner as in Example 1 in the blending ratios shown in Tables 5 and 6, except that the polyurethane polyisocyanates (A1-2) to (A1-8) and (A1'-1) to (A1'-8) were changed to polyisocyanate compositions (X-2) to (X-8) and (X'-1) to (X'-8), respectively.

<Evaluation of Adhesive>

(Color Tone of Laminate)

A plain oriented polypropylene film was coated with the adjusted adhesive at a coating amount of about 2.0 g/$m^2$ using a laminator in which the lamination speed was set to 150 m/min, and then the plain oriented polypropylene film was adhered to a non-oriented polypropylene film, followed by aging at 40°C for 3 days, and an evaluation laminate was prepared.

The prepared laminate was cut into a strip shape of 15 cm × 15 cm, and the strip was fixed on white copy paper (CHW-A4 manufactured by Nippon Paper Industries Co., Ltd.) using an adhesive tape. The color tone was visually evaluated. The results are summarized in Tables 5 and 6.

A: colorless
B: slight yellow
C: yellow
D: deep yellow

(Creation of Printed Matter)

A urethane type laminate ink (Finart R794 White G3, manufactured by DIC Corporation) was adjusted using Zahn Cup #3 manufactured by Rigo Co., Ltd. for 15 seconds (25°C), printing was performed on a corona-treated PET (polyethylene terephthalate) film (E5102, thickness: 12 μm, manufactured by Toyobo Co., Ltd.) at a printing speed of 150 m/min using a gravure printing machine equipped with a gravure plate having a plate depth of 43 μm, followed by drying or curing by passing through an oven at 70°C to form a printing layer on the PET film.

(Preparation of Evaluation Sample for Adhesive Strength)

Using a solventless test coater, the surface of the printing layer printed on the PET film was coated with the adjusted adhesive at a coating amount of 2.0 g/$m^2$ and a coating speed of 150 m/min, and the coating surface was superposed on and adhered to a vapor-deposited surface of an aluminum vapor-deposited non-oriented polypropylene film (hereinafter referred to as VMCPP, thickness: 25 μm). Next, aging was performed in an environment of 40°C and 50% RH for 3 days to cure the adhesive, and a laminate having a configuration of PET/printing layer/adhesive layer/VMCPP was prepared to obtain an evaluation sample 1.

(Adhesive Strength Evaluation 1)

The evaluation sample 1 was cut into a test piece having a length of 300 mm and a width of 15 mm. Using an Instron tensile tester, the test piece was pulled at a peel rate of 300 mm/min in an environment of 25°C to measure the T-type peel strength (N) between the PET and the VMCPP at a width of 15 mm. This test was performed five times, and the average value was obtained and evaluated according to the following criteria. The results are summarized in Tables 5 and 6 as adhesive strength 1.

A: 1.5 N or more
B: 1.0 N or more and less than 1.5 N
C: less than 1.0 N

(Preparation of Composite Film)

Using a solventless test coater, a PET film (E5102, thickness: 12 μm, manufactured by Toyobo Co., Ltd.) was coated with the adjusted adhesive in an amount of 2.0 g/$m^2$, and was pressure-bonded to an aluminum foil (hereinafter referred to as AL, thickness: 9 μm) using a nip roll (50°C). Subsequently, the aluminum foil was coated with the adjusted adhesive in an amount of 2.0 g/$m^2$, and was pressure-bonded to a polyethylene film (LLDPE, TUX-HC, thickness: 60 μm, manufactured by Mitsui Chemicals Tohcello, Inc.) using a nip roll (50°C). Aging was performed at 40°C for 3 days to prepare a laminate having a configuration of PET/adhesive layer/AL/adhesive layer/LLDPE, thereby obtaining an evaluation sample 2.

(Adhesive Strength Evaluation 2)

The evaluation sample 2 was cut into a test piece having a length of 300 mm and a width of 15 mm. Using an Instron tensile tester, the test piece was pulled at a peel rate of 300 mm/min in an environment of 25°C to measure the T-type peel strength (N) between the AL and the LLDPE at a width of 15 mm. This test was performed five times, and the average value was obtained and evaluated according to the following criteria. The results are summarized in Tables 5 and 6 as adhesive strength 2.

A: 5.5 N or more
B: 5.0 N or more and less than 5.5 N
C: less than 5.0 N

[Table 5]

| | Example | | | | | | | |
|---|---|---|---|---|---|---|---|---|
| | 1 | 2 | 3 | 4 | 5 | 6 | 7 | 8 |
| Polyisocyanate composition (X-1) | 100 | | | | | | | |
| Polyisocyanate composition (X-2) | | 100 | | | | | | |
| Polyisocyanate composition (X-3) | | | 100 | | | | | |
| Polyisocyanate composition (X-4) | | | | 100 | | | | |
| Polyisocyanate composition (X-5) | | | | | 120 | | | |
| Polyisocyanate composition (X-6) | | | | | | 120 | | |
| Polyisocyanate composition (X-7) | | | | | | | 120 | |
| Polyisocyanate composition (X-8) | | | | | | | | 120 |
| Polyol composition (Y) | 40 | 40 | 40 | 40 | 40 | 40 | 40 | 40 |
| Color tone of laminate | A | A | A | A | A | A | A | A |
| Adhesive strength 1 (PET/VMCPP) | A | A | A | A | A | A | A | A |
| Adhesive strength 2 (PET-AL/PE) | A | A | A | A | A | A | A | A |

[Table 6]

| | Comparative Example | | | | | | | |
|---|---|---|---|---|---|---|---|---|
| | 1 | 2 | 3 | 4 | 5 | 6 | 7 | 8 |
| Polyisocyanate composition (X'-1) | 100 | | | | | | | |
| Polyisocyanate composition (X'-2) | | 100 | | | | | | |
| Polyisocyanate composition (X'-3) | | | 100 | | | | | |
| Polyisocyanate composition (X'-4) | | | | 100 | | | | |
| Polyisocyanate composition (X'-5) | | | | | 120 | | | |
| Polyisocyanate composition (X'-6) | | | | | | 120 | | |

(continued)

| | Comparative Example | | | | | | | |
|---|---|---|---|---|---|---|---|---|
| | 1 | 2 | 3 | 4 | 5 | 6 | 7 | 8 |
| Polyisocyanate composition (X'-7) | | | | | | | 120 | |
| Polyisocyanate composition (X'-8) | | | | | | | | 120 |
| Polyol composition (Y) | 40 | 40 | 40 | 40 | 40 | 40 | 40 | 40 |
| Color tone of laminate | A | B | C | D | A | C | C | D |
| Adhesive strength 1 (PET/VMCPP) | C | B | B | A | C | B | B | A |
| Adhesive strength 2 (PET-AL/PE) | C | C | B | A | C | C | B | A |

## Claims

1. A two-component curable adhesive, comprising a polyisocyanate composition (X) and a polyol composition (Y), wherein

   the polyisocyanate composition (X) comprises a polyurethane polyisocyanate (A1), a diisocyanate monomer (A2), and a polyphosphoric acid (B),
   a content of the diisocyanate monomer (A2) occupying the polyisocyanate composition (X) is 0.1 mass% or less, and
   a proportion of the polyphosphoric acid (B) to the polyurethane polyisocyanate (A1) is 100 ppm or more and 5,000 ppm or less.

2. The two-component curable adhesive according to Claim 1, wherein the polyphosphoric acid (B) comprises a compound (B1) represented by the following formula (1):

   [Chem. 1]

   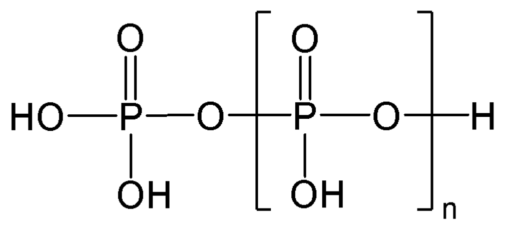

   (1)

   (in the formula (1), n represents a natural number of 2 or more and 5 or less).

3. The two-component curable adhesive according to Claim 1, wherein a proportion of the compound (B1) occupying the polyphosphoric acid (B) is 5 mass% or more and 70 mass% or less.

4. The two-component curable adhesive according to Claim 1, wherein the polyurethane polyisocyanate (A1) is a reaction product of a diisocyanate monomer and a polyol compound, and the polyol compound comprises a polyether polyol.

5. The two-component curable adhesive according to Claim 1, wherein the polyurethane polyisocyanate (A1) is obtained through:

   a step (1) of reacting a diisocyanate monomer and a polyol compound under the presence of the polyphosphoric acid (B), and
   a step (2) of removing unreacted diisocyanate monomer from a composition obtained by the step (1).

6. The two-component curable adhesive according to Claim 1, wherein

the polyol composition (Y) comprises a polyol compound (C), and
the polyol compound (C) comprises at least one kind selected from a polyether polyol (C1), a tertiary amino group-containing polyol (C2), and a polyester polyol (C3).

**7.** The two-component curable adhesive according to Claim 6, wherein a content of the tertiary amino group-containing polyol (C2) in the polyol compound (C) is 1 mass% or more and 50 mass% or less.

**8.** A laminate comprising a first substrate, a second substrate, and an adhesive layer adhering the first substrate and the second substrate to each other, wherein the adhesive layer is a cured layer of the two-component curable adhesive described in any one of Claims 1 to 7.

**9.** The laminate according to Claim 8, further comprising a metal foil or a metal vapor-deposited layer disposed between the first substrate and the adhesive layer.

**10.** A packaging material formed of the laminate described in Claim 8.

**INTERNATIONAL SEARCH REPORT**

International application No.
**PCT/JP2024/025037**

**A. CLASSIFICATION OF SUBJECT MATTER**

***C09J 175/04***(2006.01)i; ***C09J 11/06***(2006.01)i
FI: C09J175/04; C09J11/06

According to International Patent Classification (IPC) or to both national classification and IPC

**B. FIELDS SEARCHED**

Minimum documentation searched (classification system followed by classification symbols)

C09J175/04; C09J11/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/072090 A1 (DOW GLOBAL TECHNOLOGIES LLC) 07 April 2022 (2022-04-07) whole document | 1-10 |
| A | WO 2006/117886 A1 (TOYO INK MANUFACTURING CO., LTD.) 09 November 2006 (2006-11-09) entire text | 1-10 |
| A | JP 2008-222983 A (NIPPON POLYURETHANE INDUSTRY CO., LTD.) 25 September 2008 (2008-09-25) entire text | 1-10 |
| A | JP 2015-117257 A (HENKEL JAPAN LTD.) 25 June 2015 (2015-06-25) entire text | 1-10 |
| A | WO 2023/095508 A1 (TOYO INK SC HOLDINGS CO., LTD.) 01 June 2023 (2023-06-01) entire text | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/025037**

**C. DOCUMENTS CONSIDERED TO BE RELEVANT**

| Category* | Citation of document, with indication, where appropriate, of the relevant passages | Relevant to claim No. |
|---|---|---|
| A | US 2023/0159804 A1 (HENKEL AG & CO. KGAA) 25 May 2023 (2023-05-25)<br>whole document | 1-10 |
| A | WO 2011/026989 A2 (SHELL INTERNATIONALE RESEARCH MAATSCHAPPIJ B.V.) 10 March 2011 (2011-03-10)<br>whole document | 1-10 |
| A | WO 2004/067633 A1 (ASAHI GLASS COMPANY, LIMITED) 12 August 2004 (2004-08-12)<br>entire text | 1-10 |
| A | JP 2015-143291 A (ASAHI KASEI CHEMICALS CORPORATION) 06 August 2015 (2015-08-06)<br>entire text | 1-10 |

Form PCT/ISA/210 (second sheet) (July 2022)

**INTERNATIONAL SEARCH REPORT**
**Information on patent family members**

International application No.
**PCT/JP2024/025037**

| Patent document cited in search report | Publication date (day/month/year) | Patent family member(s) | Publication date (day/month/year) |
|---|---|---|---|
| WO 2022/072090 A1 | 07 April 2022 | US 2022/0106505 A1 | |
| | | EP 4222073 A1 | |
| | | CN 116194290 A | |
| | | MX 2023003325 A | |
| | | TW 202214732 A | |
| | | AR 123637 A | |
| | | JP 2023-545651 A | |
| WO 2006/117886 A1 | 09 November 2006 | US 2009/0202839 A1 | |
| | | whole document | |
| | | CN 101180378 A | |
| | | KR 10-2008-0018876 A | |
| | | TW 200637896 A | |
| JP 2008-222983 A | 25 September 2008 | (Family: none) | |
| JP 2015-117257 A | 25 June 2015 | US 2016/0280978 A1 | |
| | | whole document | |
| | | WO 2015/093583 A1 | |
| | | EP 3083246 A1 | |
| | | KR 10-2016-0101072 A | |
| | | CN 105829483 A | |
| | | MX 2016007794 A | |
| | | PT 3083246 T | |
| | | ES 2656008 T | |
| | | PL 3083246 T | |
| WO 2023/095508 A1 | 01 June 2023 | JP 2023-78502 A | |
| US 2023/0159804 A1 | 25 May 2023 | WO 2022/035636 A1 | |
| | | EP 4196543 A1 | |
| | | CA 3190003 A | |
| | | CN 116134105 A | |
| | | JP 2023-537754 A | |
| WO 2011/026989 A2 | 10 March 2011 | US 2012/0214888 A1 | |
| | | EP 2475700 A2 | |
| | | CN 102574978 A | |
| | | SG 178950 A | |
| | | KR 10-2012-0099395 A | |
| | | RU 2012113629 A | |
| | | BR 112012005152 A2 | |
| | | ES 2523751 T | |
| WO 2004/067633 A1 | 12 August 2004 | US 2005/0267279 A1 | |
| | | whole document | |
| | | US 2009/0215935 A1 | |
| | | EP 1589071 A1 | |
| | | CN 1742052 A | |
| | | KR 10-2005-0100644 A | |
| | | TW 200420613 A | |
| JP 2015-143291 A | 06 August 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002265552 A
- EP 3176196 A1